# EUROPÄISCHE PATENTANMELDUNG

(11) **EP 3 881 968 A1**
(43) Veröffentlichungstag der Anmeldung: **22.09.2021**
(21) Anmeldenummer: 20163664.4
(22) Anmeldetag: 17.03.2020
(51) Int. Cl.: B23Q 17/09, G05B 19/4065

(54) **VERFAHREN ZUR ERMITTLUNG DES VERSCHLEISSZUSTANDES EINES WERKZEUGS**

(71) Anmelder: Fraisa SA, 4512 Bellach (CH); GF Machining Solutions AG, 2504 Biel (CH)
(72) Erfinder: MAUSHART, Josef, 4500 Solothurn (CH); KIEFER, Patrick, 4665 Oftringen (CH); MAEDER, Fredi, 4500 Solothurn (CH); BESUCHET, Jean-Philippe, 2000 Neuchâtel (CH)
(74) Vertreter: Keller Schneider Patent- und Markenanwälte AG (Bern)

(57) **Zusammenfassung**

In einem Verfahren zur Ermittlung des Verschleisszustandes eines Werkzeugs (2) wird mindestens ein optisches Bild einer Oberfläche des Werkzeugs (2) aufgenommen. Bilddaten des mindestens einen optischen Bildes werden zur Erkennung einer Verschleisszone verarbeitet. Es wird eine flächige und/oder räumliche Ausdehnung der Verschleisszone bestimmt. Der Verschleisszustand des Werkzeugs (2) wird gestützt auf die bestimmte Ausdehnung klassiert. Eine Vorrichtung zur Ermittlung des Verschleisszustandes eines Werkzeugs umfasst entsprechend eine Kamera (20) zur Aufnahme mindestens eines optischen Bildes einer Oberfläche des Werkzeugs (2), ein Bildverarbeitungsmodul (31), das so konfiguriert ist, dass es Bilddaten des mindestens einen optischen Bildes zur Erkennung einer Verschleisszone verarbeitet, ein Rechenmodul (32), das so konfiguriert ist, dass es eine flächige und/oder räumliche Ausdehnung der Verschleisszone bestimmt; und ein Klassifiziermodul (33), das so konfiguriert ist, dass es den Verschleisszustand des Werkzeugs (2) gestützt auf die bestimmte Ausdehnung klassiert.

## Beschreibung

### Technisches Gebiet

Die Erfindung betrifft ein Verfahren und eine Vorrichtung zur Ermittlung des Verschleisszustandes eines Werkzeugs sowie ein Verfahren zur Aufbereitung eines Werkzeugs und eine Anordnung mit einer Vorrichtung zur Ermittlung des Verschleisszustandes und einer Einrichtung zur Aufbereitung eines Werkzeugs.

### Stand der Technik

Viele Werkzeuge, z. B. solche zur zerspanenden Materialbearbeitung wie Fräser, Bohrer usw., unterliegen aufgrund ihrer Wechselwirkung mit den Werkstücken einem Verschleiss. Dieser führt bei einem gewissen Ausmass zu einem verschlechterten Bearbeitungsergebnis, zu höheren Bearbeitungszeiten und/oder zu einer irreparablen Beschädigung des Werkzeugs (oder sogar des Werkstücks). Besonders bei Werkzeugen, die in automatisch betriebenen Maschinen eingesetzt werden, werden die Werkzeuge deshalb rechtzeitig bevor vorerwähnte Effekte auftreten aus der Maschine entnommen. Wenn möglich werden die Werkzeuge dann für einen weiteren Einsatz aufbereitet, z. B. indem Bearbeitungselemente derselben ersetzt oder aufbereitet (z. B. nachgeschliffen) werden. Wenn eine Aufbereitung generell oder aufgrund des Verschleisszustandes nicht (mehr) möglich ist, werden die Werkzeuge dem Recycling zugeführt oder entsorgt.

Das Entnehmen und Austauschen der Werkzeuge kann jeweils nach einer vorgegebenen Zeitdauer oder einer vorgegebenen Anzahl von Bearbeitungszyklen erfolgen, wobei die Dauer bzw. die Anzahl so gewählt ist, dass beim entsprechenden Werkzeugtyp bis dahin auch in einem "worst case"-Szenario keine negativen Effekte zu erwarten sind. Die Werkzeuge werden somit generell eher zu früh entnommen und ausgetauscht sowie aufbereitet. Entsprechend verkürzt sich die effektive Nutzdauer der Werkzeuge, die Anzahl der Werkzeugwechsel und der Werkzeugaufbereitungen ist höher als eigentlich notwendig.

Alternativ werden die Werkzeuge und/oder das Bearbeitungsergebnis am Werkstück vom Bedienpersonal begutachtet, je nach Werkzeug von blossem Auge oder mit Hilfe von Hilfsmitteln, z. B. Vergrösserungsgläsern, Mikroskopen oder Messgeräten. Das Bedienpersonal entscheidet dann, ob ein weiterer Einsatz möglich ist.

Die Begutachtung ist arbeitsintensiv, erfordert in der Regel einen Stopp der entsprechenden Maschine und oft auch eine Entnahme des Werkzeugs aus derselben. Insbesondere wenn die Begutachtung durch unterschiedliche Personen erfolgt, ergeben sich auch Inkonsistenzen bei der Beurteilung.

Es wurden bereits Systeme zur automatischen Verschleisserkennung vorgeschlagen. So betrifft die CN 108107838 A (Shandong University) die Verschleisserkennung an Schneidwerkzeugen. Dazu wird eine cloudbasierte Wissensdatenbank mit Abnutzungsdaten aufgebaut und ein Detektionsmodell auf Basis einer Support Vector Machine (SVM) trainiert. Die Daten werden laufend aktualisiert, so dass die Erkennung verbessert wird.

Die US 7,479,056 B2 (Kycera Tycom) beschreibt ein vollautomatisches System zur Überprüfung der Identität und Geometrie eines Bohrwerkzeugs, zum Aufbereiten des Werkzeugs, zur Überprüfung anhand von vorgegebenen Toleranzen, zur Einstellung eines Positionierungsrings am Werkzeugschaft sowie zum Reinigen und Einpacken des aufbereiteten Werkzeugs. Die Überprüfung der Geometrie erfolgt mit optischen Einheiten. Diese umfassen jeweils kopf- und frontseitige Kameras zum Abbilden der Stirn- und Mantelfläche des Werkzeugs. Anlässlich der Werkzeugprüfung erzeugte Daten können in der Steuerung gespeichert werden. Anhand der aufgenommenen Bilder werden vorgegebene Referenzpunkte identifiziert und Distanzen zwischen diesen ausgemessen. Ferner wird eine Ersteinschätzung des Schneidkantenzustands vorgenommen.

Die US 7,479,056 B2 offenbart nichts Näheres zur Auswertung der Bilddaten. Die Ersteinschätzung erfolgt anhand der Aussengeometrie des Werkzeugs und des Zustands der Schneidkanten, wobei nicht klar ist, wie dieser bestimmt oder klassiert werden kann.

### Darstellung der Erfindung

Aufgabe der Erfindung ist es, ein dem eingangs genannten technischen Gebiet zugehörendes Verfahren zu schaffen, welches automatisch und zuverlässig den Verschleisszustand eines Werkzeugs erkennen kann.

Die Lösung der Aufgabe ist durch die Merkmale des Anspruchs 1 definiert. Gemäss der Erfindung umfasst das Verfahren folgende Schritte:
a) Aufnahme mindestens eines optischen Bildes einer Oberfläche des Werkzeugs;
b) Verarbeiten von Bilddaten des mindestens einen optischen Bildes zur Erkennung einer Verschleisszone;
c) Bestimmen einer flächigen und/oder räumlichen Ausdehnung der Verschleisszone; und
d) Klassieren des Verschleisszustandes des Werkzeugs gestützt auf die bestimmte Ausdehnung.

Je nach Werkzeug und Anwendung kann sich der Verschleiss auf verschiedene Arten manifestieren. Im Vergleich zu einem unbenutzten einsatzfähigen Werkzeug sind beispielsweise gewisse Dimensionen aufgrund eines Materialabtrags am Werkzeug verringert, es treten Deformationen auf, die zu einer veränderten Geometrie führen, oder einzelne Regionen weisen Abnutzungsspuren an der Oberfläche und/oder bis in eine gewisse Tiefe auf. Als "Verschleisszone" wird dabei derjenige Bereich der Werkzeugoberfläche bezeichnet, der deutliche Verschleissspuren aufweist. Welcher Art diese Spuren sind, ist werkzeugtypabhängig festzulegen. So sind typische umlaufende Riefen geringer Tiefe bei rotativen Werkzeugen beispielsweise in der Regel nicht einer Verschleisszone zuzuordnen, während Absplitterungen in der Regel einen für das Bearbeitungsergebnis und/oder die Werkzeugleistung relevanten Verschleiss anzeigen und entsprechende Bereiche deshalb einer Verschleisszone zuzuordnen sind.

Beim optischen Bild handelt es sich um eine Aufnahme im sichtbaren Bereich des Spektrums oder in benachbarten Wellenlängenbereichen (IR und UV). Generell wird das Werkzeug bzw. dessen interessierender Bereich beleuchtet und an der Oberfläche reflektiertes Licht wird mit einer geeigneten Einrichtung (Kamera; Abbildungsoptik mit Bildsensor) erfasst. Das Licht zur Beleuchtung kann ein kontinuierliches Spektrum oder ein aus mehreren Wellenlinien oder Frequenzbändern zusammengesetztes Spektrum aufweisen oder monochromatisch sein. Auch die Kamera kann ein breites Frequenzband, eines oder mehrere schmale Bänder oder eine bestimmte Frequenz erfassen; weitergeben kann sie ebenfalls monochromatische oder polychromatische Informationen.

Die erfasste Oberfläche kann das ganze Werkzeug umfassen. In der Regel werden mehrere optische Bilder aufgenommen, die zumindest teilweise unterschiedliche Bereiche der Werkzeugoberfläche abbilden, wobei auch bei einer Zusammennahme der mehreren optischen Bilder nicht die gesamte Werkzeugoberfläche abgebildet ist, sondern nur interessierende Bereiche, z. B. Schneidkanten und angrenzende Regionen. Falls mit einer gleichmässigen Abnutzung gerechnet werden kann, kann es ausreichen, nur repräsentative Bereiche zu erfassen. Ist mit punktuellen Abnutzungen (z. B. Absplitterungen) zu rechnen, ist es in der Regel sinnvoll, alle potenziell betroffenen Bereiche optisch zu erfassen, so dass z. B. bei einer Zusammennahme der mehreren optischen Bilder die Schneidenbereiche vollständig erfasst sind.

Die Verarbeitung der Bilddaten erfolgt computergestützt. Erfindungsgemäss wird eine Verschleisszone erkannt. Dabei handelt es sich um einen flächigen Bereich, in welchem ein erheblicher Materialabtrag stattgefunden hat und welcher optisch gegenüber seiner umgebenden Oberfläche differenziert ist.

Bei der flächigen und/oder räumlichen Ausdehnung der Verschleisszone handelt es sich um eine quantitative Angabe. Sie kann absolut bestimmt werden (z. B. als Angabe in µm² bzw. µm³) oder relativ in Bezug auf eine definierte Referenzfläche bzw. ein definiertes Referenzvolumen (z. B. die Oberfläche eines Arbeitsbereichs des Werkzeugs oder das Volumen des Werkzeugs bzw. eines Schneidelements o. ä.). Bei einem fixen Abbildungsverhältnis müssen Flächen oder Volumina nicht in physikalische Einheiten umgesetzt werden, es reicht dann eine Angabe der Pixelzahl oder Voxelzahl.

Die Klassierung ordnet den Verschleisszustand des Werkzeugs einer von mehreren Klassen zu. Im einfachsten Fall stehen nur zwei Klassen zur Auswahl, nämlich "weiter verwendbar" und "nicht weiter verwendbar". Von Vorteil ist eine Klassierung mit mindestens drei Klassen "weiter verwendbar", "aufzubereiten", "zu entsorgen". Es sind mehr als drei Klassen möglich, z. B. bezüglich der folgenden Informationen:
i) Zuordnung zu einem von mehreren möglichen Aufbereitungsverfahren (Polieren, Schleifen, Neubeschichtung usw.)
ii) bei noch verwendbaren Werkzeugen: Angabe über den Zustand ("neuwertig", "leicht abgenutzt", "stark abgenutzt") im Hinblick auf den Zeitpunkt der nächsten Überprüfung oder direkt die Zuordnung eines Überprüfungsintervalls;
iii) Hinweise darauf, dass das Werkzeug noch teilweise, in bestimmten Verfahren, benutzbar ist, nicht jedoch in anderen, wo z. B. ein hartes oder schwer bearbeitbares Material zu bearbeiten ist oder eine besonders hohe Präzision angestrebt ist.

Es ist ebenfalls möglich, gesonderte Klassierungen für den Verschleisszustand verschiedener Bereiche des Werkzeugs (z. B. Werkzeugstirn und Werkzeugmantel) vorzunehmen, so dass beispielsweise eine Aufbereitung nur in gewissen Bereichen des Werkzeugs notwendig ist.

Für die Klassierung können neben der bestimmten Ausdehnung auch weitere Merkmale herangezogen werden und zwar solche, die gestützt auf das optische Bild bestimmt wurden und auch solche aus externen Quellen. Letztere können z. B. auf andersartigen, z. B. elektrischen oder magnetischen, Messungen basieren oder die bisher erfolgte Verwendung des Werkzeugs betreffen (Anzahl Zyklen, bearbeitete Materialien). Schliesslich können auch Parameter einfliessen, die aus einer Untersuchung von mit dem Werkzeug bearbeiteten Werkstücken gewonnen wurden.

Das erfindungsgemässe Verfahren lässt sich im Zusammenhang mit einer Vielzahl von Werkzeugen einsetzen, insbesondere mit solchen, die mechanisch auf das Werkstück einwirken oder die aufgrund der Wechselwirkung mit dem Werkstück abgetragen werden. Zur ersten Gruppe zählen Werkzeuge zur zerspanenden Materialbearbeitung und zwar sowohl rotative Werkzeuge zum Fräsen, Bohren oder Gewindeschneiden als auch stationäre bzw. linear bewegte Werkzeuge wie Drehmeissel, Stanzwerkzeuge oder Sägen. Zur zweiten Gruppe zählen insbesondere Elektroden, wie sie z. B. im Rahmen von EDM-Verfahren (Funkenerodieren) verwendet werden.

Das Verfahren ist insbesondere zur Ermittlung des Verschleisszustands eines der folgenden Werkzeuge ausgebildet:
- einer Elektrode zum Erodieren in einer Senkerodiermaschine,
- eines Drahts zum Erodieren in einer Drahterodiermaschine,
- eines Schleif- oder Bohrwerkzeugs zur Werkstückbearbeitung in einer Werkzeugmaschine.

Die Verschleissbestimmung kann vollautomatisch erfolgen, gegenüber einer manuellen Beurteilung liefert sie zudem ein objektives Bild, da alle Werkzeuge auf dieselbe Weise beurteilt werden. Dank der Automatisierung kann die Verschleissbestimmung in regelmässigen Abständen erfolgen, so dass zum einen Mängel im Bearbeitungsergebnis durch übermässig abgenutzte Werkzeuge verhindert werden können und dass zum anderen Werkzeuge, die eigentlich noch nutzbar sind, nicht vorzeitig aufbereitet, entsorgt oder rezykliert werden.

Bevorzugt umfassen die Bilddaten ein zweidimensionales Abbild der Oberfläche, und zur Erkennung der Verschleisszone werden die dem zweidimensionalen Abbild entsprechenden Bilddaten herangezogen. Zweidimensionale Bilder lassen sich effizient verarbeiten, und es ist möglich, bereits anhand von einem oder mehreren zweidimensionalen Abbildern die Ausdehnung einer Verschleisszone präzise zu bestimmen. Die Verschleisszone äussert sich beispielsweise in einer veränderten Oberflächenstruktur, welche sich auch optisch deutlich von einem nicht vom Verschleiss betroffenen Bereich unterscheidet. Die Unterscheidbarkeit kann gegebenenfalls verbessert werden, indem das Werkzeug mit Licht einer bestimmten spektralen Zusammensetzung, einer bestimmten Strahlform und -richtung und/oder einer bestimmten Intensität beleuchtet wird.

Mit Vorteil umfassen die Bilddaten ein dreidimensionales Abbild der Oberfläche, und zur Erkennung der Verschleisszone und/oder zum Bestimmen der Ausdehnung der Verschleisszone werden die dem dreidimensionalen Abbild entsprechenden Bilddaten herangezogen.

Es ist möglich, die Verschleisszone direkt anhand des dreidimensionalen Abbilds (oder mehrerer dreidimensionaler Abbilder) zu erkennen (so dass ein zweidimensionales Abbild nicht benötigt wird), oder die Verschleisszone wird anhand eines zweidimensionalen Abbilds erkannt, und das dreidimensionale Abbild kommt erst zum Einsatz, um die Ausdehnung - insbesondere die räumliche Ausdehnung - der Verschleisszone zu bestimmen. Parallel zu einer räumlichen Ausdehnung kann auch die flächige Ausdehnung bestimmt werden, anhand des zweidimensionalen und/oder des dreidimensionalen Abbilds.

Grundsätzlich sind also unter anderem die folgenden Varianten möglich:

| **Schritt** | **Var. A** | **Var. B** | **Var. C** | **Var. D** | **Var. E** |
|---|---|---|---|---|---|
| Erkennen Verschleisszone | 2d | 2d | 2d | 2d | 3d |
| Bestimmung flächige Ausdehnung | 2d | 2d | 2d | 3d | 3d |
| Bestimmung räumliche Ausdehnung | - | 2d | 3d | 3d | 3d |

Wenn die räumliche Ausdehnung gemäss Variante B anhand von zweidimensionalen Abbildern bestimmt werden soll, werden z. B. mehrere zweidimensionale Abbilder herangezogen oder es erfolgt ein Vergleich mit hinterlegten Geometriedaten. Aus einer Mehrzahl von zweidimensionalen Abbildern lässt sich zunächst ein dreidimensionales Abbild gewinnen, oder es wird direkt aus den zweidimensionalen Abbildern auf die räumliche Ausdehnung der Verschleisszone geschlossen.

Es sind zudem Kombinationen möglich, so dass für das Erkennen der Verschleisszone, für die Bestimmung der flächigen Ausdehnung oder der räumlichen Ausdehnung sowohl zweials auch dreidimensionale Abbilder genutzt werden.

Bei einer bevorzugten Ausführungsform wird das mindestens eine optische Bild durch ein Weisslicht-Interferometer (WLI) gewonnen. Solche Geräte umfassen eine breitbandige Lichtquelle, deren Licht über einen Strahlteiler zum einen auf den zu untersuchenden Gegenstand gerichtet und von diesem zurück zu einer Kamera reflektiert oder gestreut wird (Messarm), zum anderen über einen oder mehrere Spiegel ebenfalls zur Kamera (Referenzarm), wo die beiden Strahlen zur Überlagerung kommen. Eine (axiale) Profilierung des zu untersuchenden Gegenstandes führt zu unterschiedlichen Weglängenunterschieden zwischen Mess- und Referenzarm und damit zu einem variierenden Interferenzsignal.

Solche Geräte erlauben präzise dreidimensionale Profilmessungen, z. B. von Oberflächen, wobei eine axiale Auflösung von z. B. ca. 100 nm und eine laterale Auflösung im Mikrometerbereich erreicht wird.

Das zweidimensionale Abbild lässt sich aus einer Signalamplitude des weisslichtinterferometrischen optischen Bildes erhalten. Daraus ergeben sich scharfe Bilder mit einer ausreichend hohen Auflösung. Aus demselben optischen Bild bzw. denselben optischen Bildern lassen sich somit sowohl zwei- als auch dreidimensionale Abbilder gewinnen.

Das dreidimensionale Abbild wird entsprechend ebenfalls aus dem weisslichtinterferometrischen optischen Bild, genauer gesagt aus dem Interferenzsignal, erhalten.

Generell ist es von Vorteil, wenn sowohl die dreidimensionalen Informationen als auch das zweidimensionale Abbild aus Informationen desselben Erfassungsvorgangs gewonnen werden können. Zum einen werden die Anzahl der Erfassungsvorgänge und damit die Erfassungsdauer minimiert, zum anderen sind die Informationen bereits von Anbeginn pixelgenau aufeinander ausgerichtet.

Die Erfindung ist aber nicht auf die Auswertung von weisslichtinterferometrischen Aufnahmen beschränkt. Es lassen sich auch optische Bilder aus anderen Quellen einsetzen. So kann z. B. eine Mikroskop-Kamera zum Einsatz gelangen, um zweidimensionale Bilddaten zu generieren. Falls dreidimensionale Bilddaten benötigt werden, können diese beispielsweise mit einer 3d-Kamera, z. B. einer TOF-Kamera, oder mit konvokalen Sensoren gewonnen oder aus mehreren zweidimensionalen Bildern erzeugt werden, wobei die zweidimensionalen Bilder beispielsweise aus unterschiedlichen Winkeln aufgenommen wurden. Ebenfalls kann der zu untersuchende Bereich der Werkzeugoberfläche mit einem geeigneten Muster, z. B. einem Streifenmuster, beleuchtet werden, um Informationen über die dreidimensionale Profilierung zu erhalten. Auch der Schattenwurf, welcher sich bei unterschiedlichen Beleuchtungsrichtungen ergibt, kann zur Generierung von dreidimensionalen Informationen ausgewertet werden.

Mit Vorteil wird zur Bestimmung der Ausdehnung der Verschleisszone eine räumliche Abweichung eines aktuellen Verlaufs der Oberfläche von einem Sollverlauf einer Schneidkante bestimmt. So lässt sich die (räumliche) Ausdehnung präzise bestimmen. Sie entspricht der Differenz zwischen dem Sollvolumen des nicht abgenutzten Werkzeugs und dem aktuellen Volumen des Werkzeugs (in einem vorgegebenen Bereich). Dieses Verschleissvolumen ist in vielen Fällen ein gutes Mass für den Verschleisszustand des Werkzeugs.

Alternativ kann beispielsweise ein Sollwert oder ein Minimalwert für das Werkzeugvolumen in einem bestimmten Bereich vorgegeben sein, und das bestimmte Gesamtvolumen wird mit diesem verglichen.

In einer bevorzugten Ausführungsform wird der Sollverlauf der Schneidkante des Werkzeugs gestützt auf die Bilddaten rekonstruiert. Davon ausgehend, dass der Verschleiss in realen Fällen ein gewisses Ausmass nicht überschreitet, kann bei gängigen Werkzeugen die nicht abgenutzte Schneidkante aus (insbesondere räumlichen) Geometriedaten, die den aktuellen Zustand des Werkzeugs repräsentieren, rekonstruiert werden, z. B. durch eine Interpolation mit einer geeignet parametrisierten Kurve.

Alternativ kann der Sollverlauf aus vorexistierenden Daten gewonnen werden, z. B. generellen Geometriedaten für einen bestimmten Werkzeugtyp oder spezifischen Daten für das betroffene Werkzeug (digitaler Zwilling).

Mit Vorteil wird anhand der bestimmten Abweichung ein Verschleissvolumen berechnet. Es entspricht der räumlichen Ausdehnung der Verschleisszone und gibt wieder, welcher Volumenverlust aufgrund des Verschleisses gegenüber dem ursprünglichen, nicht abgenutzten Werkzeug eingetreten ist.

Alternativ oder zusätzlich können flächige oder linienartige Abweichungen quantifiziert werden, z. B. in einem Querschnitt, welcher die (Soll-)Schneidkante umfasst oder als maximaler oder mittlerer Abstand zwischen der Sollschneidkante und der verbleibenden Oberfläche.

Es ist möglich bei der Verschleissbeurteilung eines Werkzeugs mehrere Masse für den Verschleiss zu bestimmen und für die Klassierung auszuwerten. So kann beispielsweise bei einem Vollmaterial-Schaftwerkzeug im Bereich der Schneidkante das Verschleissvolumen, basierend auf einer Rekonstruktion der Schneidkante, bestimmt werden, während in anderen Bereichen, z. B. bei einer Schneidspitze, wo eine Rekonstruktion einer Schneidkante schwierig oder unmöglich ist, ein flächiges Mass eingesetzt wird, z. B. die flächige Ausdehnung der Verschleisszone. So lässt sich der Verschleiss zuverlässig in Bereichen unterschiedlicher Geometrie beurteilen.

In einer bevorzugten Ausführungsform wird zur Erkennung der Verschleisszone ein Machine-Learning-Algorithmus eingesetzt. Dieser kann z. B. anhand von realen oder simulierten Bilddaten abgenutzter Werkzeuge von einem menschlichen Beurteiler trainiert werden. Letztlich soll der Algorithmus in den Bilddaten diejenigen Bereiche auszeichnen, welche der Verschleisszone zuzurechnen sind, indem beispielsweise die entsprechenden Pixel in einer Pixelmap entsprechend markiert werden.

Weil der Machine-Learning-Algorithmus auf Trainingsdaten basiert, bei welchen u. a. die Verschleisszone bereits in der benötigten Weise ausgezeichnet ist (z. B. manuell), lässt sich ein solcher Algorithmus rein aufgrund der Auswahl unterschiedlicher Trainingsdaten für verschiedenste Werkzeugtypen trainieren. Mit wachsender Nutzung kann zudem die Präzision des Ergebnisses weiter gesteigert werden, indem zusätzliche Informationen als Trainingsdaten eingespeist werden, z. B. nachträgliche Korrekturen des Ergebnisses des Machine-Learning-Algorithmus. Solche können sich aus nachgelagerten Prozessen ergeben, z. B. der Aufbereitung des Werkzeugs.

Bevorzugt umfasst der Machine-Learning-Algorithmus ein künstliches neuronales Netz. Ein solches Netz, das sich für den vorliegenden Zweck als geeignet erwiesen hat, ist z. B. VGG-16 (K. Simonyan, A. Zisserman:"Very Deep Convolutional Networks for Large-Scale Image Recognition", arXiv: 1409.1556 (2014)).

Anstelle eines Machine-Learning-Algorithmus können auch andere Algorithmen zur Erkennung der Verschleisszone eingesetzt werden, z. B. Pattern-Matching-Algorithmen.

In einem bevorzugten Anwendungsfall wird der Verschleisszustand eines Vollmaterial-Schaftwerkzeugs bestimmt, wobei separat ein erster Verschleisszustand einer mantelseitigen Schneidgeometrie und ein zweiter Verschleisszustand einer stirnseitigen Schneidgeometrie bestimmt werden.

Damit lässt sich den unterschiedlichen geometrischen Verhältnissen und den unterschiedlichen Anforderungen an die Intaktheit der entsprechenden Schneidkanten Rechnung tragen. So werden beispielsweise bei Fräswerkzeugen oft die stirnseitigen Schneidkanten weniger stark beansprucht als bei Bohrwerkzeugen, während die Verhältnisse bei den mantelseitigen Schneiden gerade umgekehrt sind.

Für die Klassierung eines "Gesamt-Verschleisszustands" können der erste Verschleisszustand und der zweite Verschleisszustand unterschiedlich erhalten und/oder unterschiedlich herangezogen werden. Im einfachsten Fall ist ein Werkzeug dann zu ersetzen, wenn mindestens einer der beiden Verschleisszustände eine Ersetzung erfordert, und das Werkzeug ist dann aufzubereiten, wenn mindestens einer der beiden Verschleisszustände eine Aufbereitung erfordert. Falls die Gesamtperformance des Werkzeugs nicht einfach dem schwächsten Glied entspricht, sondern sich aus einer Wechselwirkung der Leistung beider Werkzeugabschnitte ergibt, kann es sinnvoll sein, die Verschleisszustände auf eine komplexere Weise miteinander zu verrechnen, so dass erst eine Aufbereitung oder ein Ersatz erfolgt, wenn die Gesamtperformance dies erfordert.

Mit Vorteil wird zur Bestimmung des ersten Verschleisszustandes, insbesondere für die Erkennung der Verschleisszone, ein auf einer ersten Datenmenge basierender Algorithmus eingesetzt und zur Bestimmung des zweiten Verschleisszustandes, insbesondere für die Erkennung der Verschleisszone, ein auf einer zweiten Datenmenge basierender Algorithmus, wobei die erste Datenmenge und die zweite Datenmenge unterschiedlich sind. Insbesondere sind die beiden Datenmengen im Wesentlichen disjunkt. So umfasst beispielsweise die erste Datenmenge Bilddaten als Trainingsdaten für einen Machine-Learning-Algorithmus, die den Mantelbereich abgenutzter Werkzeuge zeigen, und die zweite Datenmenge umfasst Bilddaten, die den Stirnbereich abgenutzter Werkzeuge zeigen. Eine Überlappung der ersten und der zweiten Datenmenge liegt dabei höchstens in einem Übergangsbereich (Kante oder Radius) zwischen Mantel und Stirn vor.

Nicht nur die Datenmengen können unterschiedlich sein, sondern auch die verwendeten Algorithmen, so können z. B. unterschiedliche Machine-Learning-Algorithmen oder Algorithmen mit anderen Parametern (z. B. Netztopologien bei neuronalen Netzen) eingesetzt werden.

Ein erfindungsgemässes Verfahren zur Aufbereitung eines Werkzeugs umfasst folgende Schritte:
a) Ermittlung des Verschleisszustandes eines Werkzeugs mit einem Verfahren nach einem der Ansprüche 1 bis 13;
b) Steuern mindestens einer Einrichtung zur Aufbereitung des Werkzeugs, insbesondere mittels eines Schleifvorgangs, wenn der Verschleisszustand vorgegebene Bedingungen erfüllt.

Die vorgegebenen Bedingungen umfassen insbesondere (auch) die Klassierung des Verschleisszustandes des Werkzeugs. So können die Klassen von Beginn weg so definiert werden, dass sie durchzuführenden Massnahmen entsprechen ("weiter verwendbar", "aufzubereiten", "zu entsorgen") oder aus einer Klassierung werden die Massnahmen unmittelbar oder mittelbar abgeleitet. So kann beispielsweise der Verschleisszustand in acht Klassen 1 - 8 klassiert werden (1: neuwertig, 8: stark verschlissen), wobei die Bedingungen derart vorgegeben sind, dass bei einer Klassierung in den Klassen 1 und 2 das Werkzeug weiter benutzt wird, bei einer Klassierung in den Klassen 3 - 6 eine Aufbereitung erfolgt und bei einer Klassierung in den Klassen 7 und 8 das Werkzeug rezykliert bzw. entsorgt wird.

Der Verschleisszustand kann nicht nur als Grundlage für die Entscheidung dienen, ob eine Aufbereitung mit der entsprechenden Einrichtung erfolgen soll, sondern kann auch für die durchzuführenden Massnahmen im Rahmen der Aufbereitung relevant sind. So stehen beispielsweise mehrere Aufbereitungsschritte zur Auswahl (Polieren, Schleifen, mehrere Schleifvorgänge usw.), und je nach Verschleisszustand wird eine unterschiedliche Auswahl getroffen.

Mit Vorteil wird eine Bearbeitungsgeometrie der Einrichtung zur Aufbereitung des Werkzeugs anhand des mindestens eines aufgenommenen optischen Bildes bestimmt. Sie definiert den Umfang, den Ort und die Art der Bearbeitung des Werkzeugs. Nebst der vorerwähnten Auswahl der Bearbeitungsschritte kann auch beispielsweise ein Schleifpfad in Abhängigkeit der derzeitigen Geometrie des Werkzeugs bestimmt werden. Die Bestimmung der Bearbeitungsgeometrie kann direkt auf dem optischen Bild basieren und/oder auf Vearbeitungsergebnissen, z. B. aus der Bestimmung der Ausdehnung der Verschleisszone oder der Klassierung.

Dadurch wird eine werkzeugspezifische, bedarfsgerechte Aufbereitung ermöglicht. Bei Schleifverfahren kann z. B. der (zusätzliche) Materialabtrag minimiert werden, so dass die Nutzdauer des Werkzeugs maximiert wird. Es ist zudem nicht notwendig, im Vorfeld der Aufbereitung (nochmals) eine aufwendige Untersuchung des Werkzeugs durchzuführen, weil die benötigten Daten bereits vorhanden sind.

Bei einer bevorzugten Umsetzung des erfindungsgemässen Verfahrens zum Aufbereiten ist eine Einrichtung zur Aufnahme des mindestens einen optischen Bildes an einem ersten Einsatzort angeordnet, und am ersten Einsatzort gewonnene Daten werden in einer Datenbank abgelegt. Die Einrichtung zur Aufbereitung ist an einem zweiten Einsatzort angeordnet, und die Einrichtung zur Aufbereitung ruft Daten aus der Datenbank ab. Dabei sind die beiden Einsatzorte entfernt voneinander und finden sich insbesondere in einer anderen Einrichtung bzw. einem anderen Werk. Die Datenbank kann zentral angeordnet sein, so dass die Daten dezentral erfasst und genutzt, aber zentral gespeichert werden. Die Datenbank kann aber auch am ersten Einsatzort oder am zweiten Einsatzort abgelegt sein, oder die Daten werden an beiden Orten vorgehalten und regelmässig synchronisiert.

Dies ermöglicht insbesondere auch, für ein bestimmtes Werkzeug relevante Daten auch dann vollständig zu erfassen und vorzuhalten, wenn das Werkzeug (jeweils nach erfolgter Aufbereitung) von verschiedenen Nutzern eingesetzt oder gar von verschiedenen Dienstleistern aufbereitet wird.

Bevorzugt ist das Werkzeug mit einer eindeutigen Kennung versehen, und die dem Werkzeug zugeordneten Daten sind in der Datenbank mit der eindeutigen Kennung verknüpft. Die eindeutige Kennung ist insbesondere in maschinenlesbarer Form am Werkzeug angebracht, z. B. als optische Markierung (Barcode, Matrixcode, alphanumerisch usw.) oder gespeichert auf einem Datenträger (z. B. RFID). Die eindeutige Kennung stellt sicher, dass eine korrekte Zuordnung erfolgt.

Alternativ werden die erfassten Daten auf einem Datenträger gespeichert. Dieser wird dann zusammen mit dem entsprechenden Werkzeug vom ersten zum zweiten Einsatzort transportiert.

In einem weiteren Fall erfolgt die Aufnahme des mindestens einen optischen Bildes unmittelbar bei der Einrichtung zur Aufbereitung.

Eine erfindungsgemässe Vorrichtung zur Ermittlung des Verschleisszustandes eines Werkzeugs umfasst:
a) eine Kamera zur Aufnahme mindestens eines optischen Bildes einer Oberfläche des Werkzeugs;
b) ein Bildverarbeitungsmodul, das so konfiguriert ist, dass es Bilddaten des mindestens einen optischen Bildes zur Erkennung einer Verschleisszone verarbeitet;
c) ein Rechenmodul, das so konfiguriert ist, dass es eine flächige und/oder räumliche Ausdehnung der Verschleisszone bestimmt; und
d) ein Klassifiziermodul, das so konfiguriert ist, dass es den Verschleisszustand des Werkzeugs gestützt auf die bestimmte Ausdehnung klassiert.

Bevorzugt ist die Kamera in eine Bearbeitungsmaschine mit einer Aufnahme für das Werkzeug integriert, insbesondere derart, dass die Kamera das optische Bild der Oberfläche des Werkzeugs aufnehmen kann, wenn das Werkzeug in der Aufnahme aufgenommen ist. Bei der Bearbeitungsmaschine kann es sich um eine Werkzeugmaschine zum Bohren oder Fräsen handeln, um ein Bearbeitungszentrum oder eine EDM-Maschine. Bei der Aufnahme kann es sich z. B. um die Arbeitsspindel handeln, um eine Aufnahme in einem Magazin zum Vorhalten der Werkzeuge für den Werkzeugwechsel oder um eine Transportaufnahme zum Transfer des Werkzeugs zwischen Arbeitsspindel und Magazin und umgekehrt.

Von Vorteil ist also insbesondere auch eine Bearbeitungsmaschine, die eine Kamera umfasst und welche an eine Verarbeitungsvorrichtung angeschlossen ist oder diese ganz oder teilweise enthält, wobei die Verarbeitungsvorrichtung das Bildverarbeitungsmodul, das Rechenmodul und das Klassifiziermodul umfasst.

Eine erfindungsgemässe Werkzeugmaschinenanordnung umfasst eine Werkzeugmaschine, vorzugsweise ein Bearbeitungszentrum, eine Senk- oder Draht-Erodiermaschine oder ein Bohrzentrum, und eine erfindungsgemässe Vorrichtung zur Ermittlung des Verschleisszustandes. Dabei ist die Kamera in die Werkzeugmaschine integriert oder an dieser angeordnet. Das Bildverarbeitungsmodul, das Rechenmodul und das Klassifiziermodul sind in einer Verarbeitungsvorrichtung aufgenommen. Dabei ist die Verarbeitungsvorrichtung ganz oder teilweise in der Werkzeugmaschine enthalten oder extern von dieser angeordnet und mit ihr signalmässig verbunden.

Eine erfindungsgemässe Anordnung umfasst:
a) eine erfindungsgemässe Vorrichtung zur Ermittlung des Verschleisszustandes eines Werkzeugs;
b) eine Einrichtung zur Aufbereitung des Werkzeugs, insbesondere mittels eines Schleifvorgangs;
c) eine Steuerung zum Steuern der Einrichtung zur Aufbereitung, welche so konfiguriert ist, dass sie Informationen zum Verschleisszustand von der Vorrichtung zur Ermittlung erhält und die Einrichtung zur Aufbereitung des Werkzeugs in Abhängigkeit der erhaltenen Informationen steuert.

So ist der Bearbeitungsmaschine bevorzugt eine Kamera zugeordnet, mittels welcher der Verschleisszustand der in der Maschine eingesetzten Werkzeuge regelmässig überwacht werden kann, z. B. bei jedem Werkzeugwechsel. Die Bilddaten werden unmittelbar am Ort der Bearbeitungsmaschine erfindungsgemäss weiter verarbeitet, so dass anhand der Klassierung entschieden werden kann, ob das Werkzeug weiter einsetzbar ist. Ist dies der Fall, wird es im Werkzeugmagazin abgelegt. Ansonsten wird es ausgesondert, und Daten zum Verschleisszustand (und gegebenenfalls die Bilddaten oder weitere daraus gewonnene Informationen) werden in einer Datenbank gespeichert. Das ausgesonderte Werkzeug wird dann physisch zur Einrichtung zur Aufbereitung transportiert. Diese liest die dem Werkzeug zugeordneten Daten aus der Datenbank aus und steuert in deren Abhängigkeit die Einrichtung zur Aufbereitung. Das aufbereitete Werkzeug wird dann zu derselben oder zu einer anderen Bearbeitungsmaschine transportiert und gelangt dort wieder zum Einsatz.

Bei der Aufbereitung können weitere Daten herangezogen werden, z. B. bezüglich der Historie des Werkzeugs (Anzahl Nutzungszyklen, bisherige Aufbereitungen usw.) oder bezüglich den Anforderungen des Kunden für seine spezifischen Bearbeitungsvorgänge.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein schematisches Blockdiagramm einer erfindungsgemässen Anlage zum Ermitteln des Verschleisszustands und zum Aufbereiten eines Werkzeugs;
- Fig.2: eine Seitenansicht eines Fräswerkzeugs mit einer schematischen Darstellung von Bildbereichen;
- Fig. 3: eine erste zweidimensionale Abbildung eines Bereichs eines abgenutzten Werkzeugs, erhalten aus der Signalamplitude einer weisslichtinterferometrischen Aufnahme;
- Fig. 4: eine zweite zweidimensionale Abbildung eines Bereichs eines abgenutzten Werkzeugs, erhalten aus der Signalamplitude einer weisslichtinterferometrischen Aufnahme;
- Fig.5: eine dreidimensionale Darstellung des Bereichs gemäss der zweiten Abbildung;
- Fig.6: eine rekonstruierte dreidimensionale Ansicht eines Schneidkanten- und Schneidspitzenbereichs eines Fräswerkzeugs;
- Fig.7: Schnitte durch die dreidimensionale Ansicht gemäss Figur 6 mit rekonstruierter Schneidkante; und
- Fig. 8: ein Säulendiagramm mit den Verschleissflächen in aufeinanderfolgenden Querschnitten durch das Werkzeug.

Grundsätzlich sind in den Figuren gleiche Teile mit gleichen Bezugszeichen versehen.

### Wege zur Ausführung der Erfindung

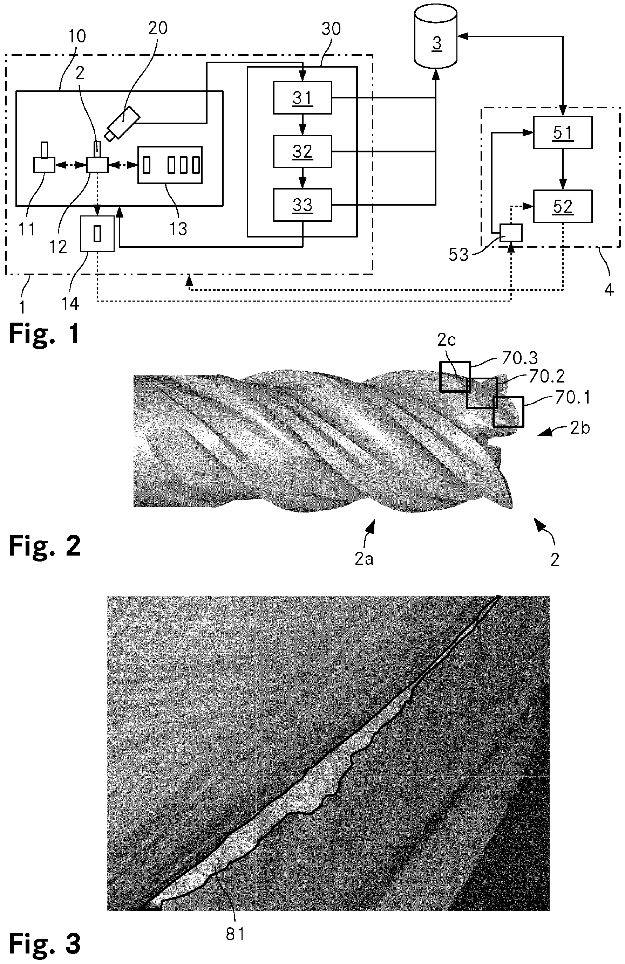

Die Figur 1 ist ein schematisches Blockdiagramm einer erfindungsgemässen Anlage zum Ermitteln des Verschleisszustands und zum Aufbereiten eines Werkzeugs.

Die Anlage umfasst eine Bearbeitungsmaschine 10, z. B. eine Fräsmaschine, die in einem ersten Werk 1 angeordnet ist. Die Bearbeitungsmaschine umfasst in an sich bekannter Weise (mindestens) eine Arbeitsspindel 11, ein Werkzeugmagazin 13 und eine Transfereinrichtung mit einer Werkzeugaufnahme 12, mittels welcher Werkzeuge 2 zwischen der Arbeitsspindel 11 und dem Werkzeugmagazin 13 ausgetauscht werden können. Bei den Werkzeugen handelt es sich im beschriebenen Beispiel um Vollmaterial-Schaftfräser mit helixförmigen Hauptschneiden am Mantel 2a und geraden Nebenschneiden auf der Stirnseite 2b des Werkzeugs 2 (siehe Figur 2). Die Transfereinrichtung ermöglicht zudem ein Aussondern eines Werkzeugs 2, wobei das Werkzeug 2 in eine Entnahmeposition 14 bewegt wird.

Der Bearbeitungsmaschine 10 ist ein Weisslichtinterferometer 20 zugeordnet, mittels welchem sich Bilder der Schneidregion eines in der Werkzeugaufnahme 12 der Transfereinrichtung gehaltenen Werkzeugs 2 aufnehmen lassen. Das Weisslichtinterferometer 20 und die Werkzeugaufnahme 12 lassen sich dabei in unterschiedlichen relativen Stellungen positionieren, so dass mehrere Bilder unterschiedlicher Bereiche der Schneidregion aufgenommen werden können.

Beim Weisslichtinterferometer 20 handelt es sich um ein Gerät des Typs helilnspect H6 der Firma Heliotis AG, Root (Luzern), Schweiz. Dieses umfasst eine LED-Lichtquelle, ein Michelson-Objektiv und einen CMOS-Bildsensor. Das Weisslichtinterferometer selbst ist an einem 4-Achs-System (X, Y, Z, R(Y)) angeordnet, so dass es sich relativ zum in der Werkzeugaufnahme 12 aufgenommenen Werkzeug 2 flexibel positionieren lässt.

Das Weisslichtinterferometer 20 bietet ein Messfeld von 0.56x0.54 mm, wobei ein Tiefenbereich von 2 mm erfassbar ist. Die axiale Genauigkeit beträgt 100 nm, die laterale Genauigkeit 2 µm. Das Gerät liefert eine dreidimensionale Punktewolke und ein zweidimensionales Bild, welches der gemessenen Signalamplitude entspricht. Letzteres ist vergleichbar mit einem Graustufenbild des erfassten Bereichs.

Vom Weisslichtinterferometer 20 werden nun - wie in der Figur 2 schematisch dargestellt - aufeinanderfolgend mehrere Bildbereiche 70.1, 70.2, 70.3 erfasst, welche einem relevanten Bereich der Werkzeugoberfläche entsprechen und z. B. ausgehend von der Schneidspitze entlang einer Schneidkante 2c angeordnet sind. Dazu wird die Kamera des Weisslichtinterferometers 20 mit Hilfe des 4-Achs-Systems relativ zum Werkzeug 2 bewegt. Grundsätzlich können sowohl Bereiche am Mantel 2a des Werkzeugs 2 als auch solche auf der Stirnseite 2b des Werkzeugs 2 abgebildet werden. Die Bildbereiche 70.1, 70.2, 70.3 weisen mit Vorteil eine gewisse Überlappung auf, so dass sie später einfacher miteinander kombiniert werden können.

Die vom Weisslichtinterferometer 20 aufgenommenen Daten werden an eine Verarbeitungseinheit 30 übermittelt. Bei dieser handelt es sich um einen Rechner, auf welchem softwaremässig ein Bildverarbeitungsmodul 31, ein Rechenmodul 32 und ein Klassifiziermodul 33 realisiert sind. Das Bildverarbeitungsmodul 31 empfängt die Daten des Weisslichtinterferometers und fügt zunächst Bilder mehrerer Bildbereiche 70.1, 70.2, 70.3 zusammen, so dass letztlich Bilder mit einer Grösse von ca. 2x2 mm erzeugt werden. Die Auflösung beträgt ca. 1000 x 1000 Pixel.

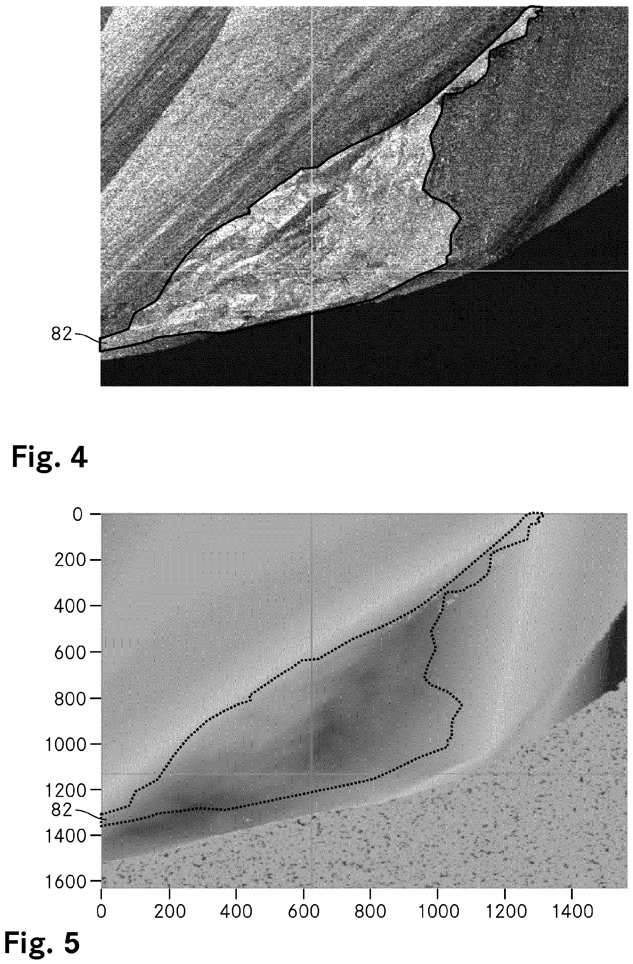

Die Bilder liegen zum einen als dreidimensionale Darstellung vor, in welcher jedem Pixel des Messfelds ein Tiefenwert zugeordnet wird. Eine entsprechende Darstellung ist in der weiter unten beschriebenen Figur 5 wiedergegeben. Unterschiedliche Graustufen codieren unterschiedliche Tiefen.

Zum anderen erzeugt das Bildverarbeitungsmodul 31 eine zweidimensionale Darstellung, in welcher jedem Pixel ein Helligkeitswert zugeordnet ist. Dieser entspricht der am Sensor erzeugten Signalamplitude (vgl. Figuren 3 und 4).

Im Bildverarbeitungsmodul 31 wird dann gestützt auf die zweidimensionale Darstellung eine Verschleisszone identifiziert, wie weiter unten näher beschrieben. Die Informationen zur Lage der Verschleisszone und zur dreidimensionalen Geometrie des erfassten Ausschnitts werden dann wie ebenfalls nachfolgend dargestellt vom Rechenmodul 32 weiter verarbeitet, so dass eine räumliche Ausdehnung der Verschleisszone resultiert. Schliesslich erhält das Klassifiziermodul dieses Resultat und ordnet dem Werkzeug eine Verschleissklasse zu ("weiter verwendbar", "aufzubereiten", "zu entsorgen").

Auf diese Weise wird jedes Werkzeug nach der Entnahme aus der Arbeitsspindel auf seinen Verschleisszustand geprüft. Es kann sinnvoll sein, vor der Prüfung einen Reinigungsschritt durchzuführen, so dass die Messungen nicht durch anhaftenden Staub oder Späne beeinträchtigt werden. Zu diesem Zweck kann eine Reinigungsvorrichtung, z. B. mit einer Flüssigkeits- oder Luftdüse, eingesetzt werden. Falls der Verschleisszustand eine weitere Verwendung zulässt, wird das Werkzeug im Werkzeugmagazin 13 abgelegt. Falls eine Aufbereitung notwendig ist oder das Werkzeug entsorgt bzw. rezykliert werden soll, wird es in die Entnahmeposition 14 bewegt. Gleichzeitig wird das Ergebnis der Klassifizierung angezeigt. Daten zum aufzubereitenden Werkzeug 2 werden, zusammen mit einer eindeutigen Kennung des Werkzeugs in einer zentralen Datenbank 3 abgelegt. Die zentrale Kennung ist auch - z. B. optisch oder elektronisch - am Werkzeug 2 vermerkt.

Falls das Werkzeug 2 aufbereitet werden soll, wird es auf übliche Weise zu einer Aufbereitungseinrichtung 4 gesandt. Dort wird zunächst die Kennung mit einem Lesegerät 53 ausgelesen, z. B. mittels einer Kamera oder eines RFID-Lesegeräts und nachgeordneter Elektronik. Eine Steuerung 51 ruft dann gestützt auf die Kennung die Daten zum Werkzeug 2 von der Datenbank 3 ab. Anschliessend wird die Maschine zur Aufbereitung, z. B. eine Schleifmaschine 52, in Abhängigkeit der abgerufenen Daten gesteuert. Die Daten umfassen z. B. Angaben zu aufzubereitenden Bereichen (Stirn, Mantel; spezifische Angabe der Schneiden oder Schneidenregionen) und/oder Informationen zur derzeitigen Geometrie des Werkzeugs. So kann die Aufbereitung ohne weitere Datenerfassung effizient und zielführend erfolgen. Informationen über die erfolgte Aufbereitung werden wiederum in der Datenbank 3, der Werkzeugkennung zugeordnet, abgelegt.

Nach erfolgter Aufbereitung wird das Werkzeug 2 wieder zurück zum Werk 1 (oder zu einem anderen Werk) gesandt. Dort kann es weiter zum Einsatz kommen.

Das Erkennen der Verschleisszone im Bildverarbeitungsmodul 31 erfolgt gestützt auf die zweidimensionale Darstellung (siehe Figuren 3, 4) mit Hilfe eines künstlichen neuronalen Netzes. Konkret werden für die Erkennung der Verschleisszone zwei Netze eingesetzt, eines für den Mantel 2a des Werkzeugs und ein weiteres für die Stirnfläche 2b des Werkzeugs. So kann dem unterschiedlichen Erscheinungsbild der Abnutzung in den beiden Bereichen Rechnung getragen werden. Beide Netze sind des Typs VGG-16. Die Netzwerke erkennen vollautomatisch, welche Bereiche der Bilder Verschleisszonen darstellen und markieren diese entsprechend in einer Pixelmap. Zur Reduktion der benötigten Rechenleistung für die Erkennung und in Abhängigkeit der Ursprungsauflösung der Bilddaten kann die Auflösung der zweidimensionalen Bilddaten in einem vorgelagerten Schritt zunächst mit an sich bekannten Verfahren reduziert werden. Im vorliegenden Fall kann die Anzahl der zu verarbeitenden Pixel beispielsweise auf einen Viertel reduziert werden, wenn jeweils vier Pixel zusammengefasst werden. Es ergibt sich dann noch eine Auflösung von 500 x 500 Pixel.

Das Training der beiden Netze erfolgte gestützt auf insgesamt 1950 WLI-Amplitudenbilder, welche zunächst auf eine Auflösung von 500 x 500 Pixel reduziert wurden. Die Bilder wurden manuell mit einem "Image Labeler" segmentiert und dann mit der Zuordnung der Verschleisszonen in das neuronale Netz eingespeist. Nach dem erfolgten Training sind die Netze in der Lage, Verschleisszonen sowohl am Mantel als auch auf der Stirnfläche mit hoher Genauigkeit vollautomatisch zu markieren. In den Figuren 3 und 4 sind die erkannten Verschleisszonen 81, 82 von einer durchgehenden Linie umrahmt. Wie aus dem Vergleich mit der Figur 5 deutlich wird, wo die anhand der Figur 4 identifizierte Verschleisszone 82 mit einer gepunkteten Linie eingezeichnet ist, ist die Verschleisszone in der zweidimensionalen Darstellung der Signalamplitude deutlich besser erkennbar als in der dreidimensionalen Darstellung.

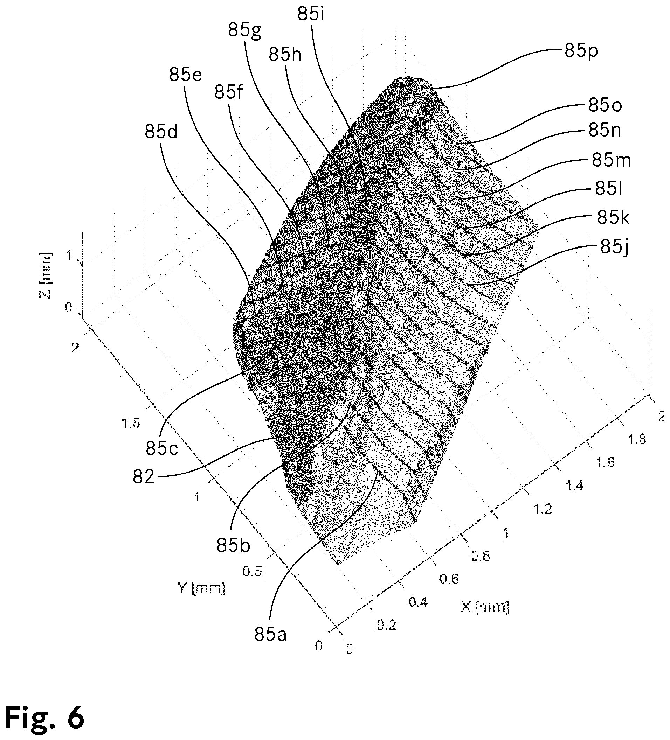

Im Rechenmodul 32 werden die von Verschleiss betroffenen Messpunkte gemäss Pixelmap in das 3D Modell übertragen und markiert (vgl. Figur 6). Wie in dieser rekonstruierten dreidimensionalen Ansicht eines Schneidspitzen- und -kantenbereichs eines Fräswerkzeugs gut sichtbar ist, unterscheidet sich die Situation bei der Schneidspitze (links bzw. unten, im Bereich der Querschnitte 85a...85d) stark von der Situation bei der eigentlichen Schneidkante. Im Bereich der Schneidspitze sind in der Regel im Unterschied zum Schneidkantenbereich keine Frei- und/oder Spanflächen (mehr) vorhanden, gestützt auf welche eine Rekonstruktion der Schneidkantengeometrie möglich wäre. Der Bereich der Schneidspitze wird somit bei der Bestimmung der Ausdehnung der Verschleisszone anders behandelt als der Bereich der Schneidkante.

Namentlich wird im Bereich der Schneidspitze die Anzahl der Pixel ausgewertet, welche in der Pixelmap als der Verschleisszone zugehörig markiert wurden. Dies liefert ein erstes Mass für den Verschleiss des Werkzeugs.

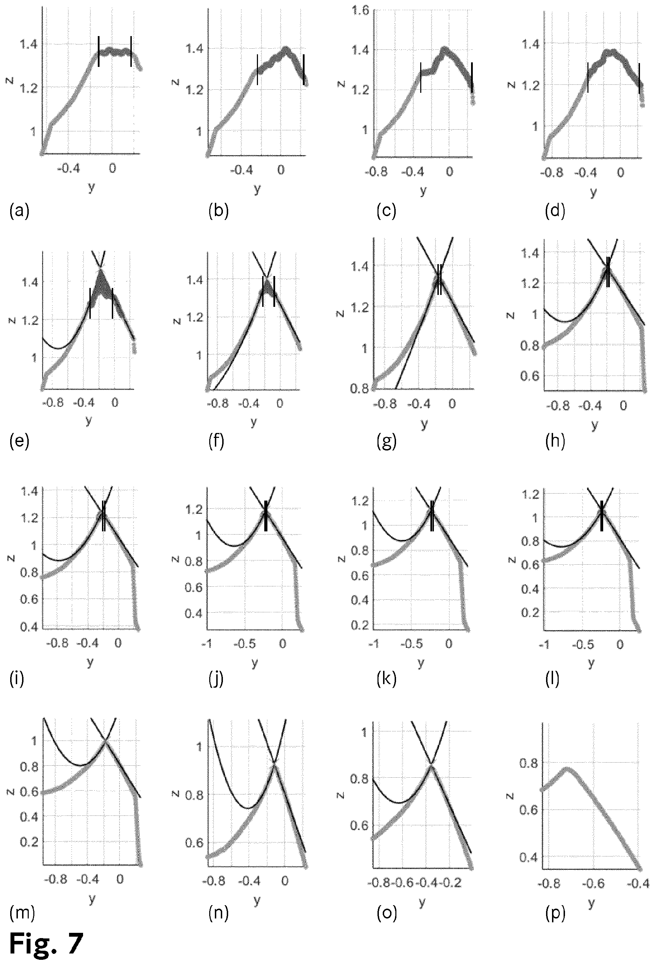

Im Bereich der Schneidkante wird zur Bestimmung der räumlichen Ausdehnung der Verschleisszone zunächst die Schneidkante im betrachteten Bereich anhand der Bilddaten rekonstruiert. Es werden «Scheiben» aus der 3D- Punktewolke geschnitten um den Rechenaufwand deutlich zu verringern, im vorliegenden Fall werden 112 Querschnitte erzeugt, von denen 16 Querschnitte 85a...85p in den Figuren 6 und 7 dargestellt sind. In denjenigen Querschnitten 85e...p, welche der Schneidkante zugerechnet werden, wird anschliessend die Originalgeometrie rekonstruiert (siehe Figur 7). Dazu wird für die Frei- und die Spanfläche jeweils ein Kurvenfitting mit Extrapolation durchgeführt (durchgezogene dünne schwarze Linien), wobei die von Verschleiss betroffenen Bereiche der Oberfläche (jeweils zwischen den zwei vertikalen Linien in den Querschnitten (a) - (I)) für das Fitting ausgeschlossen werden, um eine Verfälschung der Extrapolation zu verhindern. Der Schnittpunkt der beiden Kurven für die Frei- bzw. die Spanfläche wird als Soll-Schneidkante interpretiert. Im vorliegenden Fall liefert bereits ein Fit mit Polynomen zweiter Ordnung gute Resultate. Die Anschliessend wird die Flächendifferenz zwischen der rekonstruierten und der tatsächlichen Geometrie als Verschleissfläche im jeweiligen Querschnitt berechnet (markierte Fläche, besonders gut sichtbar in den Figuren 7 (e), 7 (f)).

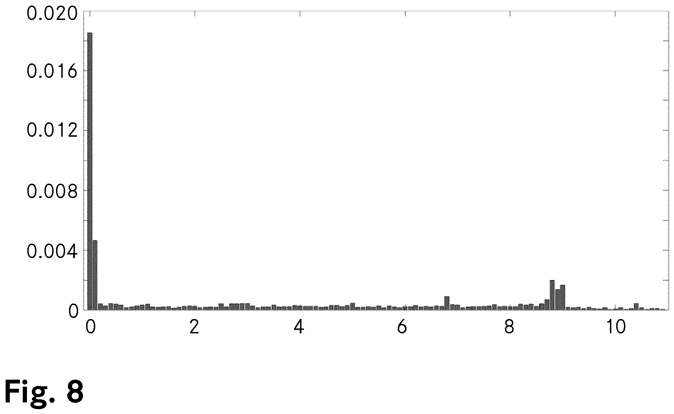

Die Figur 8 zeigt ein Säulendiagramm mit den Verschleissflächen entlang einer Schneidkante, hier für alle betrachteten 112 Querschnitte. Die vertikale Achse bezeichnet dabei die Verschleissfläche in mm², die horizontale Achse repräsentiert die Position entlang der Schneidkante.

Eine geeignete Summe der Verschleissflächen entspricht schliesslich dem Verschleissvolumen.

Um ein Mass für den Verschleiss zu erhalten, kann auch einfach ein Mittelwert aller Querschnittsverschleissflächen gebildet werden. Zusammen mit der Gesamtzahl von "Verschleisspixeln" aller Schneidspitzen liegen somit zwei Masse vor, welche den Verschleiss quantifizieren.

Im Klassifiziermodul 33 wird schliesslich der Verschleisszustand des Werkzeugs anhand der beiden Masse klassiert. Die Klassifikation kann beispielsweise in einem einfachen Fall gemäss dem folgenden Schema erfolgen:

| **Szenario** | **Mittelwert Querschnittsverschleissflächen** | **Gesamtzahl Verschleisspixel der Schneidspitzen** | **Klassierung** |
|---|---|---|---|
| A | ≤ T_{QV1} | ≤ T_{NVP1} | weiter verwendbar |
| B | > T_{QV1}, ≤ T_{QV2} | irrelevant | weiter verwendbar, beobachten |
| C | irrelevant | > T_{NVP1}, ≤ T_{NVP2} | weiter verwendbar, beobachten |
| D | > T_{QV2}, ≤ T_{QV3} | ≤ T_{NVP3} | aufzubereiten |
| E | ≤ T_{QV3} | > T_{NVP2}, ≤ T_{NVP3} | aufzubereiten |
| F | > T_{QV3} | irrelevant | rezyklieren |
| G | irrelevant | > T_{NVP3} | rezyklieren |

Hierbei bezeichnen die Parameter Tₓ Grenzwerte, die werkzeugspezifisch vorgebbar sind. Die Klassierung "beobachten" bedeutet, dass das Werkzeug nach einer gewissen Einsatzzeit oder einer Zahl von Einsatzzyklen wiederum geprüft werden muss, weil die Verschleissgrenze bald auftreten könnte. Die Einsatzzeit oder Zykluszahl ist dabei kleiner als generell für alle Werkzeuge vorgegeben.

In komplexeren Szenarien lassen sich die Werkzeuge in gewissen Fällen noch in einem beschränkten Anwendungsbereich einsetzen, so dass weitere Klassen gebildet werden können.

Auch die Masse können auf einer komplexeren Definition beruhen. So können unterschiedliche Bereiche der Schneidkante bzw. der Schneidspitze z. B. unterschiedlich gewichtet werden, um der unterschiedlichen Bedeutung beim Einsatz des Werkzeugs Rechnung zu tragen. Die Verschleissflächen (oder andere lokale Masse für den Verschleiss) können zudem auch einzeln berücksichtigt werden. So kann beispielsweise ein Werkzeug, bei dem mindestens ein lokales Mass einen vorgegebenen (verhältnismässig hohen) Grenzwert übersteigt, automatisch der Kategorie "aufzubereiten" oder der Kategorie "rezyklieren" zugewiesen werden, unabhängig davon, was die globalen Masse sind.

Es können zudem bei Bedarf drei oder mehr Masse erzeugt und für die Klassierung ausgewertet werden.

Die Erfindung ist nicht auf das dargestellte Ausführungsbeispiel beschränkt. So können einzelne Komponenten anders ausgebildet oder anders angeordnet sein. Die Erfassung und Analyse der Bilddaten kann auf andere Weise erfolgen, und Einzelheiten des Verfahrens können dem spezifischen Werkzeugtyp angepasst werden.

Zusammenfassend ist festzustellen, dass die Erfindung ein Verfahren zur Ermittlung des Verschleisszustandes eines Werkzeugs schafft, welches automatisch und zuverlässig den Verschleisszustand eines Werkzeugs erkennen kann.

## Patentansprüche

1. Verfahren zur Ermittlung des Verschleisszustandes eines Werkzeugs, umfassend folgende Schritte:
a) Aufnahme mindestens eines optischen Bildes einer Oberfläche des Werkzeugs;
b) Verarbeiten von Bilddaten des mindestens einen optischen Bildes zur Erkennung einer Verschleisszone;
c) Bestimmen einer flächigen und/oder räumlichen Ausdehnung der Verschleisszone;
d) Klassieren des Verschleisszustandes des Werkzeugs gestützt auf die bestimmte Ausdehnung.

2. Verfahren nach Anspruch 1, **dadurch gekennzeichnet, dass** die Bilddaten ein zweidimensionales Abbild der Oberfläche umfassen und dass zur Erkennung der Verschleisszone die dem zweidimensionalen Abbild entsprechenden Bilddaten herangezogen werden.

3. Verfahren nach Anspruch 1 oder 2, **dadurch gekennzeichnet, dass** die Bilddaten ein dreidimensionales Abbild der Oberfläche umfassen und dass zur Erkennung der Verschleisszone und/oder zum Bestimmen der Ausdehnung der Verschleisszone die dem dreidimensionalen Abbild entsprechenden Bilddaten herangezogen werden.

4. Verfahren nach einem der Ansprüche 1 bis 3, **dadurch gekennzeichnet, dass** das Verfahren zur Ermittlung des Verschleisszustands eines der folgenden Werkzeuge ausgebildet ist:
- einer Elektrode zum Erodieren in einer Senkerodiermaschine,
- eines Drahts zum Erodieren in einer Drahterodiermaschine,
- eines Schleif- oder Bohrwerkzeugs zur Werkstückbearbeitung in einer Werkzeugmaschine.

5. Verfahren nach einem der Ansprüche 1 bis 4, **dadurch gekennzeichnet, dass** zur Bestimmung der Ausdehnung der Verschleisszone eine räumliche Abweichung eines aktuellen Verlaufs der Oberfläche von einem Sollverlauf einer Schneidkante bestimmt wird.

6. Verfahren nach Anspruch 5, **dadurch gekennzeichnet, dass** der Sollverlauf der Schneidkante des Werkzeugs gestützt auf die Bilddaten rekonstruiert wird.

7. Verfahren nach Anspruch 5 oder 6, **dadurch gekennzeichnet, dass** anhand der bestimmten Abweichung ein Verschleissvolumen berechnet wird.

8. Verfahren nach einem der Ansprüche 1 bis 7, **dadurch gekennzeichnet, dass** der Verschleisszustand eines Vollmaterial-Schaftwerkzeugs bestimmt wird, wobei separat ein erster Verschleisszustand einer mantelseitigen Schneidgeometrie und ein zweiter Verschleisszustand einer stirnseitigen Schneidgeometrie bestimmt werden.

9. Verfahren nach Anspruch 8, **dadurch gekennzeichnet, dass** zur Bestimmung des ersten Verschleisszustandes ein auf einer ersten Datenmenge basierender Algorithmus eingesetzt wird und dass zur Bestimmung des zweiten Verschleisszustandes ein auf einer zweiten Datenmenge basierender Algorithmus eingesetzt wird, wobei die erste Datenmenge und die zweite Datenmenge unterschiedlich sind.

10. Verfahren zur Aufbereitung eines Werkzeugs, umfassend folgende Schritte:
a) Ermittlung des Verschleisszustandes eines Werkzeugs mit einem Verfahren nach einem der Ansprüche 1 bis 9;
b) Steuern mindestens einer Einrichtung zur Aufbereitung des Werkzeugs, insbesondere mittels eines Schleifvorgangs, wenn der Verschleisszustand vorgegebene Bedingungen erfüllt.

11. Verfahren nach Anspruch 10, **dadurch gekennzeichnet, dass** eine Bearbeitungsgeometrie der Einrichtung zur Aufbereitung des Werkzeugs anhand des mindestens eines aufgenommenen optischen Bildes bestimmt wird.

12. Verfahren nach Anspruch 10 oder 11, **dadurch gekennzeichnet, dass** eine Einrichtung zur Aufnahme des mindestens einen optischen Bildes an einem ersten Einsatzort angeordnet ist, dass am ersten Einsatzort gewonnene Daten in einer Datenbank abgelegt werden, dass die Einrichtung zur Aufbereitung an einem zweiten Einsatzort angeordnet ist und dass die Einrichtung zur Aufbereitung Daten aus der Datenbank abruft.

13. Verfahren nach Anspruch 12, **dadurch gekennzeichnet, dass** das Werkzeug mit einer eindeutigen Kennung versehen ist und dass die dem Werkzeug zugeordneten Daten in der Datenbank mit der eindeutigen Kennung verknüpft sind.

14. Vorrichtung zur Ermittlung des Verschleisszustandes eines Werkzeugs, umfassend:
a) eine Kamera zur Aufnahme mindestens eines optischen Bildes einer Oberfläche des Werkzeugs;
b) ein Bildverarbeitungsmodul, das so konfiguriert ist, dass es Bilddaten des mindestens einen optischen Bildes zur Erkennung einer Verschleisszone verarbeitet;
c) ein Rechenmodul, das so konfiguriert ist, dass es eine flächige und/oder räumliche Ausdehnung der Verschleisszone bestimmt; und
d) ein Klassifiziermodul, das so konfiguriert ist, dass es den Verschleisszustand des Werkzeugs gestützt auf die bestimmte Ausdehnung klassiert.

15. Vorrichtung nach Anspruch 14, **dadurch gekennzeichnet, dass** die Kamera in eine Bearbeitungsmaschine mit einer Aufnahme für das Werkzeug integriert ist, insbesondere derart, dass die Kamera das optische Bild der Oberfläche des Werkzeugs aufnehmen kann, wenn das Werkzeug in der Aufnahme aufgenommen ist.

16. Werkzeugmaschinenanordnung, umfassend eine Werkzeugmaschine, vorzugsweise ein Bearbeitungszentrum, eine Senk- oder Draht-Erodiermaschine oder ein Bohrzentrum, und eine Vorrichtung nach Anspruch 14 oder 15, **dadurch gekennzeichnet, dass** die Kamera in die Werkzeugmachine integriert oder an dieser angeordnet ist und dass das Bildverarbeitungsmodul, das Rechenmodul und das Klassifiziermodul in einer Verarbeitungsvorrichtung aufgenommen sind, wobei die Verarbeitungsvorrichtung ganz oder teilweise in der Werkzeugmaschine enthalten ist oder extern von dieser angeordnet und mit ihr signalmässig verbunden ist.

17. Anordnung, umfassend:
a) eine Vorrichtung zur Ermittlung des Verschleisszustandes eines Werkzeugs nach Anspruch 14 oder 15;
b) eine Einrichtung zur Aufbereitung des Werkzeugs, insbesondere mittels eines Schleifvorgangs;
c) eine Steuerung zum Steuern der Einrichtung zur Aufbereitung, welche so konfiguriert ist, dass sie Informationen zum Verschleisszustand von der Vorrichtung zur Ermittlung erhält und die Einrichtung zur Aufbereitung des Werkzeugs in Abhängigkeit der erhaltenen Informationen steuert.
